# EUROPEAN PATENT APPLICATION

(11) **EP 3 644 265 A1**
(43) Date of publication of application: **29.04.2020**
(21) Application number: 18866369.4
(22) Date of filing: 05.10.2018
(51) Int. Cl.: G06Q 40/04

(54) **METHOD AND SYSTEM FOR DIGITAL CURRENCY TRANSACTION VERIFICATION AND REGISTRATION**

(30) Priority: 13.10.2017 CN 201710951248
(71) Applicant: China Unionpay Co., Ltd, Shanghai 200135 (CN)
(72) Inventor: ZHU, Tao, Shanghai 200135 (CN); TONG, Yaogang, Shanghai 200135 (CN); ZHOU, Yu, Shanghai 200135 (CN)
(74) Representative: Slingsby Partners LLP
(86) International application number: PCT/CN2018/109247
(87) International publication number: WO 2019/072137

(57) **Abstract**

A method for verification and registration of digital currency transaction, including: authorizing, by a central node, one or more institutions to perform a transaction verification; after reception of a request for a transaction sent by a user and a pre-selected endorsement policy, parsing, by the central node, the request, generating a first data packet, and sending the first data packet to the one or more authorized institutions for the transaction verification; receiving a verification feedback result from an authorized institution of the one or more authorized institutions; and registering, by the central node, the transaction and informing the user that the transaction is successful, when the central node determines that the received verification feedback result meets a requirement of the endorsement policy. There is also provided a system and a computer storage medium for verification and registration of digital currency transaction.

## Description

### TECHNICAL FIELD

The present disclosure relates to technical field of block chain, in particular to methods and systems for verification and registration of digital currency transaction.

### BACKGROUND

Block chain is a new application of computer technology such as distributed data storage, point-to-point transmission, consensus mechanism, encryption algorithm, and the like. The consensus mechanism is a mathematical algorithm in the block chain system to achieve trust establishment and benefit acquirement among different nodes. Block chain is designed to be a protective measure, such as (applied in) a high fault-tolerant distributed computing system. Block chain make mixed-consistency possible, which allows the block chain to be suitable for recording of events, title, medical records and other activities that require collection of data, identity management, transaction process management, and provenance management. Block chain has a huge potential in finance, and it has a huge impact in leading global trade.

Chinese Patent Application No. 201610154702.4, entitled "Method for performing digital currency transaction with block chain technique" describes a method for digital currency transaction using a block chain technique. In the method, an individual user and a corporate user perform a digital currency transaction through a decentralized block chain technology; after transaction, electronic account book information and various transaction certificates are generated; all data records are stored in nodes of a block chain; a company, a legal institution or a public security organization may fetch information from any of the nodes to track status of cash flow and permanently store the information. The patent does not mention specific process to verify and register the digital currency transaction. In addition, in the digital currency transaction in the patent, the electronic account book information and various transaction certificates are simply stored, but how to reach a consensus, how to protect privacy and other issues are not mentioned, which does not meet requirements of operation and regulatory of a digital currency system.

Currently, existing digital currency systems are mostly flat networks, i.e. rights of nodes within a public chain or a union chain are equal. However, in an architecture of "one-currency, two-library, and three-center (the one-currency refers to digital currency, the two-library refers to a digital currency issue library and a bank library, the three-center refers to a registration center, a certification center, and a large data center)" for digital currency in a central bank, the central bank and commercial banks will form a hierarchical coalition chain network, where only the commercial banks authorized by the central bank are qualified to verify the digital currency transaction. Issues to be addressed include: (1) how to set up a transaction endorsement policy to improve transaction efficiency for the users; (2) how to verify the transaction in the "central-bank-commercial-bank" coalition chain network; and (3) how to ensure user privacy in transaction by an encryption algorithm.

Accordingly, it is desirable for an improved method and system for verification and registration of digital currency transaction.

The above description of this Background section is only for enhancement of understanding of the general background of the present disclosure, and should not be taken as an acknowledgment or any form of suggestion that the above description forms prior art known to those ordinary skilled in the art.

### SUMMARY

In order to solve one or more of the problems mentioned above, the present disclosure proposes a solution for verification and registration of digital currency transaction based on the "central-bank-commercial-bank" dual system. The present disclosure proposes to apply distributed account book technology to the central bank and the commercial banks. There is no need for a unified center to manage user accounts, verify user transactions, and confirm user assets. A user may first initiate a transactions through a digital currency wallet. In view of factors such as privacy, transaction rate, and the like, the endorsement policy for the transaction may be user-defined. The commercial banks may verify the transaction. After the transaction is validated, the validation will be sent to the central bank for transaction information registration. A double-chain privacy protection mechanism may be used in the transaction registration to ensure confidentiality of information.

In an aspect of the present disclosure, there is provided a method for verification and registration of digital currency transaction. The method includes: authorizing, by a central node, one or more institutions to perform a transaction verification, and sending a first public key and a first private key to the one or more authorized institutions; after reception of a request for a transaction sent by a user and a pre-selected endorsement policy, parsing, by the central node, the request, generating a first data packet, and sending the first data packet to the one or more authorized institutions for the transaction verification; receiving a verification feedback result from an authorized institution of the one or more authorized institutions, wherein when the request is validated by the authorized institution of the one or more authorized institutions, the authorized institution is to sign the transaction using the first private key to generate a signature and send the signature to the central node as the verification feedback result, and the central node is to verify the signature of the authorized institution using the first public key; and registering, by the central node, the transaction and informing the user that the transaction is successful, when the central node determines that the received verification feedback result meets a requirement of the endorsement policy, wherein the central node is provided with a main block chain related to a digital currency transaction and maintains two links as the main block chain, a first link of the two links is used for the user to query a transaction associated with the user, and a second link of the two links is used for access by the central node and the one or more authorized institutions.

Optionally, in the method, the central node is a central bank, and the one or more authorized institutions are commercial banks.

Optionally, in the method, the pre-selected endorsement policy comprises any one of: signatures of all authorized institutions; a combination of authorized institutions trusted by the user; a local consensus; and a majority policy with weighting.

Optionally, in the method, the main block chain includes a block header and a block body, the block header includes a hash value of a current block, an index hash value of a previous block, a timestamp and a Merkle tree root, and the block body includes a transaction record and a list of public keys of the authorized institutions.

Optionally, in the method, the one or more authorized institutions are to perform the transaction verification through two database lists including an anti-double-spend list and a transaction completion list.

Optionally, in the method, when the central node determines that the received verification feedback result meets the requirement of the endorsement policy, the central node is to broadcast to inform all the authorized institutions to update an addrid list.

Optionally, in the method, the central node is provided with a second private key and a second public key corresponding to the central node, and the user is provided with a third private key and a third public key corresponding to the user, and wherein when the central node determines that the received verification feedback result meets the requirement of the endorsement policy, the central node is to, via the first link, sign the transaction with the second private key, and encrypt and package the transaction with the third public key.

Optionally, in the method, transaction content and signatures of the one or more authorized institutions are recorded in the second link, so that the central node is able to supervise the one or more authorized institutions using the second link.

Optionally, in the method, when the one or more authorized institutions are deemed to tamper with transaction content or fail to participate in a system consensus for a long time, the central node is to cancel authorization to the one or more authorized institutions by deleting public keys of the one or more authorized institutions from a next block during generation of the next block.

Optionally, in the method, the request sent by the user is encrypted with the third private key.

In another aspect of the present disclosure, there is provided a system for verification and registration of a digital currency transaction. The system includes a central node and one or more institutions authorized by the central node, wherein the central node is provided with a main block chain related to a digital currency transaction and maintains two links as the main block chain, a first link of the two links is used for a user to query a transaction associated with the user, and a second link of the two links is used for access by the central node and the one or more authorized institutions, and wherein the central node is configured to: send a first public key and a first private key for a transaction verification to the one or more authorized institutions; parse, after reception of a request for a transaction sent by the user and a pre-selected endorsement policy, the request and generate a first data packet, and send the first data packet to the one or more authorized institutions for the transaction verification; receive a verification feedback result from an authorized institution of the one or more authorized institutions, wherein when the request is validated by the authorized institution of the one or more authorized institutions, the authorized institution is to sign the transaction using the first private key to generate a signature and send the signature to the central node as the verification feedback result, and the central node is to verify the signature of the authorized institution using the first public key; and register the transaction and inform the user that the transaction is successful, when the central node determines that the received verification feedback result meets a requirement of the endorsement policy.

Optionally, in the system, the central node is a central bank, and the one or more authorized institutions are commercial banks.

In yet another aspect of the present disclosure, there is provided a computer storage medium storing instructions that, when executed, implement the above method for verification and registration of a digital currency transaction.

Compared with the prior art, the solution proposed in the present disclosure may allow customization of endorsement policy, which may effectively reduce overhead complexity in consensus communication, reduce consumption in system resource, and improve transaction efficiency. In addition, in the technical solutions of the present disclosure, two database lists may be set up, so as to effectively prevent double-spend attacks on digital currency and reentry of transactions and improve the security of digital currency transaction. Furthermore, in the technical solutions of the present disclosure, a double-chain privacy protection mechanism may be adopted, so as to allow supervision on the behavior of authorized institutions (such as commercial banks) while protecting the privacy of users.

Other features and advantages of the method and apparatus of the present disclosure will be described more clearly through accompanying drawings incorporated herein and specific embodiments for explaining certain principles of the present disclosure together with the drawings.

### BRIEF DESCRIPTION OF THE DRAWINGS

Fig. 1 schematically illustrates a method for verification and registration of digital currency transaction according to an embodiment of the present disclosure;
Fig. 2 is a flowchart illustrates a method for verification and registration of digital currency transaction according to an embodiment of the present disclosure;
Fig. 3 schematically illustrates a system for verification and registration of digital currency transaction according to an embodiment of the present disclosure; and
Fig. 4 schematically illustrates a form of a transaction package according to an embodiment of the present disclosure.

### DETAILED DESCRIPTION

The following description describes specific embodiments of the disclosure to teach those skilled in the art the best mode in how to make and utilize the disclosure. To teach the principles of the disclosure, some conventional aspects have been simplified or omitted. Those skilled in the art will understand that variations from these embodiments will fall within the scope of the disclosure. Those skilled in the art will understand that the features described below can be combined in various ways to form multiple variations of the disclosure. Accordingly, the disclosure is not limited to the specific embodiments described below, but only limited by appended claims and equivalents thereof.

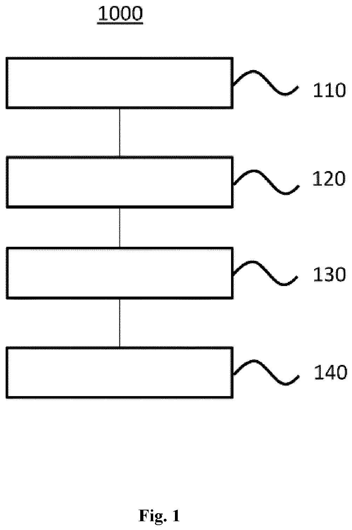

Fig. 1 illustrates a method 1000 for verification and registration of digital currency transaction according to an embodiment of the present disclosure.

In step 110, a central node authorizes one or more institutions to perform transaction verification, and sends a first public key and a first private key to the one or more authorized institutions.

In step 120, the central node, after reception of a request for a transaction sent by a user and a pre-selected endorsement policy, parses the request, generates a first data packet, and sends the first data packet to the one or more authorized institutions for transaction verification.

In step 130, a verification feedback result is received from an authorized institution of the one or more authorized institutions. When the request is validated by the authorized institution of the one or more authorized institutions, the authorized institution may be configured to sign the transaction using the first private key to generate a signature and send the signature to the central node as the verification feedback result, and the central node may be configured to verify the signature of the authorized institution using the first public key.

In step 140, when the central node determines that the received verification feedback result meets a requirement of the endorsement policy, the central node registers the transaction and inform the user that the transaction is successful.

In the method for transaction verification and registration shown in Fig. 1, the central node may be provided with a main block chain related to a digital currency transaction and maintain two links as the main block chain. A first link of the two links may be used for the user to query a transaction associated with the user, and a second link of the two links may be used for access by the central node and the one or more authorized institutions. That is, in the context of the present disclosure, the central node may adopt a double-chain privacy protection mechanism.

In a specific implementation, the central node may be a central bank, and the one or more authorized institutions may be commercial bank(s).

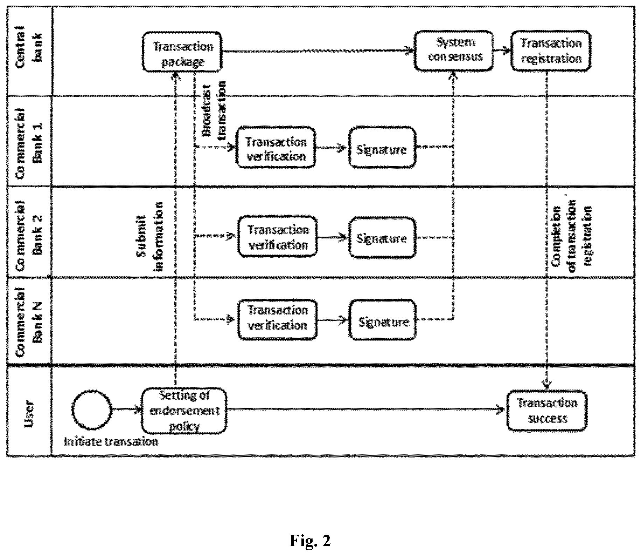

Referring to Fig. 2, it shows a flowchart illustrates a method for verification and registration of digital currency transaction according to an embodiment of the present disclosure.

As shown in Fig. 2, a user may initiate a transaction and set an endorsement policy. In an embodiment, a first user may first use his own private key to sign transaction information (for example, payment of M digital currencies from the first user to a second user), and then the first user may customize and select the endorsement policy for the transaction.

In a traditional block chain system, transaction broadcasting and network consensus will be performed after the transaction is initiated, that is, a network layer and a consensus layer are tightly coupled and inseparable, which requires 1-to-N broadcast and a plurality of N-to-N multicasts to reach consensus for the transaction. As a result, frequent communication overhead often reduces the overall performance of the system.

In contrast, in the context of the present disclosure, the network layer and the consensus layer are modularly divided. In an embodiment, after initiation of a transaction, the user may endorse the transaction in the following four ways: signatures of all authorized institutions; a combination of authorized institutions trusted by the user; a local consensus; and a majority policy with weighting.

Specifically, when the endorsement policy of "signatures of all authorized institutions" is adopted, a transaction consensus only may be reached when the transaction is validated by all participants in the network. For the endorsement policy of "a combination of authorized institutions trusted by the user", for example, when the authorized institutions are commercial banks, the user may need to combine the trusted commercial banks, for example, (Commercial Bank 1 OR Commercial Bank 2) AND (any two of the following commercial banks: Commercial Bank 3, Commercial Bank 4, Commercial Bank 5, Commercial Bank 6, Commercial Bank 7). For the endorsement policy of "a local consensus", the user may need to select at least f+1 nodes for consensus from 3f+1 nodes of the network to ensure system fault tolerance. For the endorsement policy of "a majority policy with weighting", a corresponding weight may be assigned to each of the authorized institutions in advance, the weights represented by the finally collected signatures may be summed, and it is determined whether the summation exceeds half. For example, the weight of Commercial Bank 1 is 49, the weight of Commercial Bank 2 is 15, the weight of Commercial Bank 3 is 15, the weight of Commercial Bank 4 is 10, and so on.

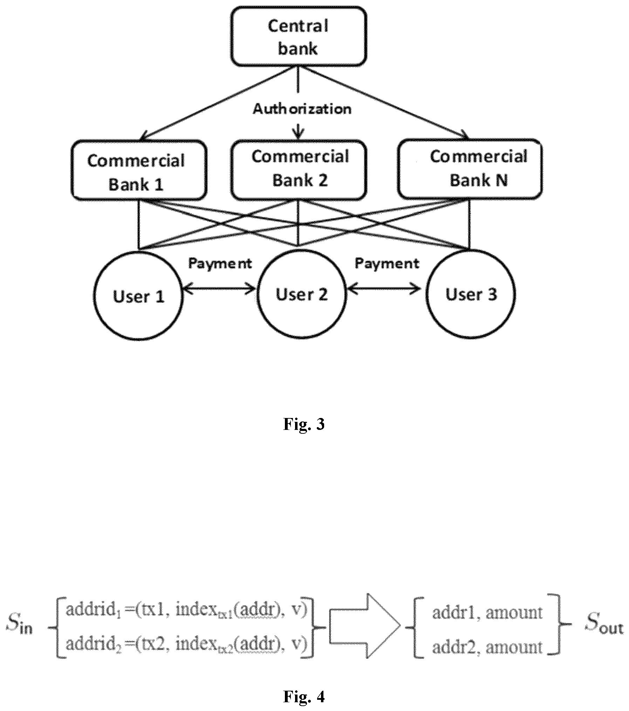

Continuing to refer to Fig. 2, the user then may submit information to the central bank, and the central bank may perform transaction packaging. In an embodiment, when the central bank receives the request for the transaction sent by the user, it may first parse the request and extract a digital currency greater than the payment amount from the user's account balance. The digital currency in the user's account may be in the form of "unused output", and its specific expression may be addrid = (tx, indextx, v), where "tx" is a transaction ID, "indextx" is an index value of the transaction output, and "v" is the value of the output. The final form of Sin-> Sout is shown in Fig. 4. In "Sout" of Fig. 4, addr1 and addr2 may refer to a receiving address of user 2 and a change address of user 1, respectively.

In Fig. 2, after the transaction packaging is completed, the central bank may send the transaction to each of the commercial banks for transaction verification. These commercial banks may be, for example, institutions that are pre-authorized by the central bank prior to the transaction. In an embodiment, the commercial banks may be authorized through a CA mechanism, where the central bank sends public and private keys to each of the commercial banks, the commercial banks verify the transaction and sign the transaction to generate signatures, and the central bank uses the public key stored in the block to verify the signatures of the commercial banks.

During the transaction verification of the authorized institutions, an anti-double spend mechanism and an anti-reentry mechanism may be preferably used. In an embodiment, one or more authorized institutions may perform transaction verification through two database lists, including an anti-double-spend list and a transaction completion list. Compared with proof-of-work mechanism in crypto-currency systems such as Bitcoin and Ethereum, transaction verification through database lists is more efficient and faster in view of prevention of double-spend and reentry.

In an embodiment, all used addrids are recorded in the anti-double-spend list, thus after receiving the transaction, the commercial banks may compare all the input addrids in Sin with the data in the list. If duplicate items are found, it is proved that there is a double-spend, so that the transaction cannot be approved and thus the transaction fails. In an embodiment, a transaction being verified by the commercial banks is recorded in the anti-reentry list, thus when receiving the transaction package, the commercial banks may compare the record with the data in the list. If duplicate items are found, it is proved that the transaction has been submitted multiple times, so that the transaction cannot be validated and thus the transaction fails. When the anti-double-spend verification and the anti-reentry verification is validated, the commercial banks may sign the transaction and send the signature to the central bank for approval.

The central node may be provided with a second private key and a second public key associated with the central node. The user may be provided with a third private key and a third public key associated with the user. During a system consensus, the central node (such as the central bank) may determine whether the received verification feedback result meets the requirement of the endorsement policy. In an embodiment, when the central bank collects signature(s) from commercial bank(s) that meets certain requirement(s), the consensus is reached for the transaction.

When the consensus is reached for the transaction, the central node (the central bank in this example) may consider following two aspects.

Calculation of the output of the transaction and broadcast of the result: the central bank may calculate Sout to form addrid, such as addridnew = (tx, indextx, v), and then broadcast it to inform all commercial banks to update the addrid list.

Transaction registration: the double-chain privacy protection mechanism is adopted, that is, the main block chain of the central bank may essentially include two links: one is a ciphertext chain (chain A) which may be used for the users to query transactions related to themselves, and to protect the privacy of the users; another is a plaintext chain (B chain) which may be accessed by the central bank and the commercial banks.

In an embodiment, the two chains may store different contents. Specific mechanisms will be described below.

For the chain A, after the consensus is reached for the transaction, the central bank may sign the transaction with its own private key, and then encrypt and package the transaction with the public key of the user 1. For users other than the user 1, only the ciphertext of the transaction can be seen, but for the user 1, the content of the transaction may be accessible through the private key.

For the chain B, it works in two aspects. First, it is used to synchronize the account book for the central-bank-commercial-bank. That is, there are complex timing problems in the transaction process of the digital currency system, and the existence of the chain B may enable the commercial banks to synchronize their own database lists in real time to maintain stable operation of the system. Second, the chain is used for supervision. Not only transaction content, but also all the signatures collected by the central bank during the system consensus are recorded in the chain. That is, the central bank may supervise behavior of all the commercial banks during the operation of the system. For example, if a commercial bank tampers with the transaction content, this behavior is regarded as cheat; if a commercial bank does not participate in the system consensus for a long time, this behavior is regarded as nonfeasance. In either case, the commercial bank will not be authorized during generation of a next block, that is, the public key of the commercial bank will be removed from the block.

Finally, after completion of the transaction registration, the central bank may inform the user that the transaction is successful.

Fig. 3 schematically illustrates a system for verification and registration of digital currency transaction according to an embodiment of the present disclosure. The system may include a central bank and one or more commercial banks authorized by the central bank.

In the system, the central bank is provided with the main block chain of the digital currency system. Blocks in the block chain may be subdivided into a block header and a block body. The block header may record a hash value of a current block, an index hash value of a previous block, a timestamp, and a Merkle tree root. The block body may include two parts: (1) a transaction record, that is, an encapsulation of all transactions generated during this period in the form of a merkle tree; and (2) a list of public keys of authorized institutions (PI, P2, P3, ... PN). A supervision policy for the commercial banks can be realized by utilizing the list of public keys, as the commercial banks are authorized through the CA mechanism, where the central bank sends public and private keys to each of the commercial banks, the commercial banks verify the transaction and sign the transaction to generate signatures, and the central bank uses the public key stored in the block to verify the signatures of the commercial banks. On the other hand, setting up a list of public keys in the main block chain may clearly tell the users which commercial banks have the right to verify digital currency transactions. If a commercial bank cheats, falsifies, or does not act in a process of digital currency transaction, the central bank will delete the public key of the commercial bank during generation of the next block, proving that the commercial bank is not qualified to verify transactions or perform consensus.

In an embodiment, the central bank, as a manager of the digital currency system, may pre-generate N sets of public and private key pairs (P₁, S₁) ... (P_{N}, S_{N}) and authorize them to the commercial banks for transaction verification, and maintain operation stability of the digital currency system.

It should be noted that, in the above, the technical solutions of the present disclosure are mainly described with the central bank as the central node and the commercial bank(s) as the authorized institution(s). Without departing from the gist of the present disclosure, those skilled in the art may apply the above technical solutions to different scenarios. For example, the central bank is still the central node, but the authorized institutions include not only the commercial banks but also authorized enterprises or organizations.

In addition, the method for verification and registration of digital currency transaction in the present disclosure may be implemented via a code. The code can be stored on various computer storage media (including but not limited to magnetic disks, magnetic tapes, optical disks, hard disks, U disks, SD cards, and memory modules, etc.).

The above examples mainly explain solutions for verification and registration of digital currency transaction in the present disclosure. Although only some of the specific embodiments of the present disclosure have been described, those skilled in the art should understand that the present disclosure may be implemented in many other forms without departing from the spirit and scope thereof. Therefore, the illustrated examples and embodiments are to be regarded as illustrative rather than restrictive ones, and the present disclosure may cover various modifications and replacements without departing from the spirit and scope of the present disclosure as defined by the appended claims.

## Claims

1. A method for verification and registration of a digital currency transaction, comprising:
authorizing, by a central node, one or more institutions to perform a transaction verification, and sending a first public key and a first private key to the one or more authorized insti tuti ons;
after reception of a request for a transaction sent by a user and a pre-selected endorsement policy, parsing, by the central node, the request, generating a first data packet, and sending the first data packet to the one or more authorized institutions for the transaction verification;
receiving a verification feedback result from an authorized institution of the one or more authorized institutions, wherein when the request is validated by the authorized institution of the one or more authorized institutions, the authorized institution is to sign the transaction using the first private key to generate a signature and send the signature to the central node as the verification feedback result, and the central node is to verify the signature of the authorized institution using the first public key; and
registering, by the central node, the transaction and informing the user that the transaction is successful, when the central node determines that the received verification feedback result meets a requirement of the endorsement policy,
wherein the central node is provided with a main block chain related to a digital currency transaction and maintains two links as the main block chain, a first link of the two links is used for the user to query a transaction associated with the user, and a second link of the two links is used for access by the central node and the one or more authorized institutions.

2. The method of claim 1, wherein the central node is a central bank, and the one or more authorized institutions are commercial banks.

3. The method of claim 1 or 2, wherein the pre-selected endorsement policy comprises any one of:
signatures of all authorized institutions;
a combination of authorized institutions trusted by the user;
a local consensus; and
a majority policy with weighting.

4. The method of claim 1 or 2, wherein the main block chain includes a block header and a block body, the block header includes a hash value of a current block, an index hash value of a previous block, a timestamp and a Merkle tree root, and the block body includes a transaction record and a list of public keys of the authorized institutions.

5. The method of claim 1 or 2, wherein the one or more authorized institutions are to perform the transaction verification through two database lists including an anti-double-spend list and a transaction completion list.

6. The method of claim 1 or 2, wherein when the central node determines that the received verification feedback result meets the requirement of the endorsement policy, the central node is to broadcast to inform all the authorized institutions to update an addrid list.

7. The method of claim 1 or 2, wherein the central node is provided with a second private key and a second public key corresponding to the central node, and the user is provided with a third private key and a third public key corresponding to the user, and wherein when the central node determines that the received verification feedback result meets the requirement of the endorsement policy, the central node is to, via the first link, sign the transaction with the second private key, and encrypt and package the transaction with the third public key.

8. The method of claim 1 or 2, wherein transaction content and signatures of the one or more authorized institutions are recorded in the second link, so that the central node is able to supervise the one or more authorized institutions using the second link.

9. The method of claim 1 or 2, wherein when the one or more authorized institutions are deemed to tamper with transaction content or fail to participate in a system consensus for a long time, the central node is to cancel authorization to the one or more authorized institutions by deleting public keys of the one or more authorized institutions from a next block during generation of the next block.

10. The method of claim 7, wherein the request sent by the user is encrypted with the third private key.

11. A system for verification and registration of a digital currency transaction, comprising a central node and one or more institutions authorized by the central node, wherein the central node is provided with a main block chain related to a digital currency transaction and maintains two links as the main block chain, a first link of the two links is used for a user to query a transaction associated with the user, and a second link of the two links is used for access by the central node and the one or more authorized institutions, and wherein the central node is configured to:
send a first public key and a first private key for a transaction verification to the one or more authorized institutions;
parse, after reception of a request for a transaction sent by the user and a pre-selected endorsement policy, the request and generate a first data packet, and send the first data packet to the one or more authorized institutions for the transaction verification;
receive a verification feedback result from an authorized institution of the one or more authorized institutions, wherein when the request is validated by the authorized institution of the one or more authorized institutions, the authorized institution is to sign the transaction using the first private key to generate a signature and send the signature to the central node as the verification feedback result, and the central node is to verify the signature of the authorized institution using the first public key; and
register the transaction and inform the user that the transaction is successful, when the central node determines that the received verification feedback result meets a requirement of the endorsement policy.

12. The system of claim 11, wherein the central node is a central bank, and the one or more authorized institutions are commercial banks.

13. The system of claim 11 or 12, wherein the pre-selected endorsement policy comprises any one of:
signatures of all authorized institutions;
a combination of authorized institutions trusted by the user;
a local consensus; and
a majority policy with weighting.

14. The system of claim 11 or 12, wherein the main block chain includes a block header and a block body, the block header includes a hash value of a current block, an index hash value of a previous block, a timestamp and a Merkle tree root, and the block body includes a transaction record and a list of public keys of the authorized institutions.

15. The system of claim 11 or 12, wherein the one or more authorized institutions are to perform the transaction verification through two database lists including an anti-double-spend list and a transaction completion list.

16. The system of claim 11 or 12, wherein when the central node determines that the received verification feedback result meets the requirement of the endorsement policy, the central node is to broadcast to inform all the authorized institutions to update an addrid list.

17. The system of claim 11 or 12, wherein the central node is provided with a second private key and a second public key corresponding to the central node, and the user is provided with a third private key and a third public key corresponding to the user, and wherein when the central node determines that the received verification feedback result meets the requirement of the endorsement policy, the central node is to, via the first link, sign the transaction with the second private key, and encrypt and package the transaction with the third public key.

18. The method of claim 11 or 12, wherein transaction content and signatures of the one or more authorized institutions are recorded in the second link, so that the central node is able to supervise the one or more authorized institutions using the second link.

19. The system of claim 11 or 12, wherein when the one or more authorized institutions are deemed to tamper with transaction content or fail to participate in a system consensus for a long time, the central node is to cancel authorization to the one or more authorized institutions by deleting public keys of the one or more authorized institutions from a next block during generation of the next block.

20. A computer storage medium storing instructions that, when executed, implement the method of any one of claims 1 to 10.
